# EUROPEAN PATENT APPLICATION

(11) **EP 4 844 602 A1**
(43) Date of publication of application: **25.11.2026**
(21) Application number: 25187587.8
(22) Date of filing: 04.07.2025
(51) Int. Cl.: G06F 16/3329, G06F 16/3332, G06N 20/00

(54) **METHOD AND SYSTEM FOR PROVIDING CHARACTER-BASED PROFESSIONAL AGENT SERVICE**

(30) Priority: 19.05.2025 KR 20250064401
(71) Applicant: Jang, Cheong Il, Gimpo-si, Gyeonggi-do (KR)
(72) Inventor: Jang, Cheong Il, Gimpo-si, Gyeonggi-do (KR)
(74) Representative: Jung, Minkyu

(57) **Abstract**

According to an aspect of the present invention, there is provided a system for providing a character-based professional agent service, the system including: a user input reception unit configured to receive a query and user information from a user terminal, and to identify a matching professional field by analyzing the query; a per-character model acquisition unit configured to operate in conjunction with a database in which vectorized documents are stored, and to generate a character capable of responding for each professional field by learning information stored in the database; and a response unit configured to provide a response to the query through the character corresponding to the professional field identified based on the query.

## Description

### CROSS-REFERENCE TO RELATED APPLICATION

This application claims the benefit of Korean Patent Application No. 10-2025-0064401 filed on May 19, 2025, which is hereby incorporated by reference herein in its entirety.

### BACKGROUND

### 1. Technical Field

The present invention relates to a method and system for providing a character-based professional agent service, and more particularly, to a method and system that are equipped with professional knowledge and unique functions for each character and provide various functions and customized responses according to user requests.

### 2. Description of the Related Art

With the development of artificial intelligence (AI)-related technology, there are being provided chatbots in which messenger platforms and AI are combined together, and chatbots in which voice recognition platforms and AI are combined together. Chatbots may not only provide various types of information needed by users, but may also process tasks (e.g., schedule checks, searches, etc.) requested by users.

Chatbot services have made great strides with big data analysis, machine learning, and natural language processing technologies, and now provide conversation services by inferring correct responses and also predicting subsequent queries based on the analysis of the conversation content of users. Furthermore, recently, chatbot services have expanded beyond simple conversation services to handle various actions such as shopping and payment.

However, conventional large language model (LLM)-based chatbot systems are limited to single model-based responses and lack a structure that is equipped with per-field expertise or performs individual functions. Accordingly, the conventional LLM-based chatbot systems have limitations in terms of the reliability and effectiveness of responses.

Therefore, there is a demand for the development of a chatbot service that can provide customized functions and responses for each professional field.

### SUMMARY

An object of the present invention is to overcome the above-described problem of the conventional art.

An object of the present invention is to provide more personalized and professional responses by responding based on professional knowledge documents, reflecting unique characteristics such as emotion, a manner of speaking, and rhythm in responses, and performing a dedicated command execution function when necessary.

Objects of the present invention are not limited to the objects mentioned above, and other objects not mentioned may be clearly understood from the following description.

According to an aspect of the present invention, there is provided a system for providing a character-based professional agent service, the system including: a user input reception unit configured to receive a query and user information from a user terminal, and to identify a matching professional field by analyzing the query; a per-character model acquisition unit configured to operate in conjunction with a database in which vectorized documents are stored, and to generate a (respective) character capable of responding for each (of one or more) professional field(s) by learning information stored in the database; and a response unit configured to provide a response to the query through the (respective) character corresponding to the professional field identified based on the query.

The system may be a computer-implemented system. The system may comprise a service server (e.g. computer server or cloud server). The user input reception unit, per-character model acquisition unit, and response unit may be included in the service server. For example,

The system may comprise one or more user terminals in communication with the service server. Each of the user terminals may be configured to transmit a query input by a user, e.g. in the form of text or voice, to the service server.

The database may comprise a (non-transitory) memory in which a plurality of vectorized documents are stored. The database may be in the form of a vector database.

The per-character model acquisition unit may be configured to generate a plurality of characters for respective professional fields. For example, each of the plurality of characters may be associated with a respective professional field.

Each of the plurality of characters may be associated with a respective database containing one or more vectorized documents. In other words, the database mentioned above may comprise a plurality of databases, each database corresponding to a respective character (and/or professional field), and each database comprising one or more vectorized documents.

Each of the plurality of characters may be generated by learning information from the respective database associated with that character. In other words, each character may comprise a respective machine learning model (e.g. LLM) that is trained using the database associated with that character.

The user input reception unit may be configured to identify the matching professional field by matching the query to one of a plurality of professional fields. In response to identifying the matching professional field, the response unit may select one of the plurality of characters associated with the matching professional field. The response unit may then provide (e.g. generate) a response to the query using the selected character. The response may thus be provided (at least in part) by the machine learning model of the selected character.

The per-character model acquisition unit may generate a personalized character having a user's image and voice according to a request from the user terminal.

The response unit may calculate a score for each character and first recommend a character having the highest calculated score; and the score may be proportional to the similarity between a vector obtained as a result of the analysis of the query and the vector of documents organized in a database for each professional field of each character and the rate at which each character has been recommended to other users whose similarity in personal information is equal to or higher than a threshold value.

According to an embodiment of the present invention, more personalized and professional responses are provided by responding based on professional knowledge documents, reflecting unique characteristics such as emotion, a manner of speaking, and rhythm in responses, and performing a dedicated command execution function when necessary.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a diagram schematically showing the configuration of a system for providing a character-based professional agent service according to one embodiment of the present invention; and
FIG. 2 is a diagram illustrating the detailed operation and internal configuration of a service server according to one embodiment of the present invention.

### DETAILED DESCRIPTION

The detailed description of the present invention to be set forth below refers to the accompanying drawings, which illustrate specific embodiments in which the present invention can be practiced. These embodiments are described in sufficient detail to enable those skilled in the art to practice the present invention. It should be understood that the various embodiments of the present invention are different from each other, but are not necessarily mutually exclusive. For example, specific shapes, structures, and features described herein may be implemented in other embodiments without departing from the spirit and scope of the present invention. It should also be understood that the positions or arrangements of individual components within each disclosed embodiment may be changed without departing from the spirit and scope of the present invention. Accordingly, the detailed description set forth below is not intended to be limiting, and the scope of the present invention is defined only by the appended claims, along with the full scope of equivalents of what are claimed by those claims, when appropriately so described. In the accompanying drawings, like reference numerals designate the same or similar functions throughout a plurality of aspects.

Hereinafter, in order to enable those skilled in the art to easily implement the present invention, preferred embodiments of the present invention will be described in detail with reference to the accompanying drawings.

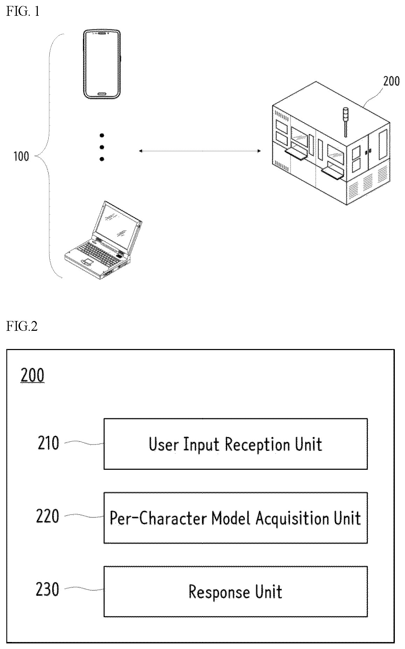

FIG. 1 is a diagram schematically showing the configuration of a system for providing a character-based professional agent service according to one embodiment of the present invention.

Referring to FIG. 1, the system for providing a character-based professional agent service according to the present embodiment may include a plurality of user terminals 100 and a service server 200.

Although the service server 200 is described as a component separate from the user terminals 100 in the present specification, each operation of the service server 200 to be described below may be included in the user terminals 100.

Each of the user terminals 100 and the service server 200 may communicate with each other over a communication network, e.g., a mobile communication network, a local area network (LAN), a metropolitan area network (MAN), a wide area network (WAN), the World Wide Web (WWW), a wireless communication network (e.g., a Wireless Fidelity (WiFi) network), and/or the like.

Each of the user terminals 100 has a computational function, and may be implemented in any form as long as it is a device that can communicate with the outside. For example, it may be implemented as a smartphone, a tablet personal computer (PC), a desktop, a laptop, or the like, but is not limited thereto.

Each of the user terminals 100 transmits a query, input by a user in the form of text or voice, to the service server 200, receives a response to the query, and displays the response in a form that a user can identify.

Furthermore, it may be made possible to connect with the service server 200 and perform customization work on each character.

The service server 200 performs the function of, based on artificial intelligence, generating a character for each professional field and providing responses to queries received from the user terminals 100.

FIG. 2 is a diagram illustrating the detailed operation and internal configuration of a service server 200 according to one embodiment of the present invention.

Referring to FIG. 2, the service server 200 according to the present embodiment may include a user input reception unit 210, a per-character model acquisition unit 220, and a response unit 230.

The user input reception unit 210, the per-character model acquisition unit 220, and the response unit 230 may be program modules or pieces of hardware that can communicate with external devices. These program modules or pieces of hardware may each be included in the service server 200 or another device capable of communicating with the service server 200 in the form of an operating system, an application program module, or another program module, and may be physically stored on one or more of various known memory devices. Meanwhile, these program modules or pieces of hardware include, but are not limited to, routines, subroutines, programs, objects, components, data structures, etc. that perform specific tasks to be described below or execute specific abstract data types according to the present invention.

The user input reception unit 210 receives information about a query from each of the user terminals 100. The query may be constructed in the form of voice or text. The user input reception unit 210 may analyze the corresponding query. When the query is received in the form of voice information, it may be converted into text data based on a Text-to-Speech (TTS) conversion algorithm. The field to which the query belongs may be determined through either a keyword included in the query or a keyword most frequently appearing in the query.

The per-character model acquisition unit 220 generates a plurality of characters for respective professional fields. The characters may be composed of graphic images, images, and/or the like. The professional fields may be fields such as law, counseling, development, fortune telling, and destiny, and may be divided into a numerous number of fields.

Each of the characters may have a Qdrant or similar database containing one or more vectorized documents. A large number of documents corresponding to a specific professional field may be vectorized through a natural language processing (NLP) algorithm, and the documents may be stored in a per-character database. As an example, the Word2Vec algorithm may be used for vectorizing the documents. The Word2Vec algorithm may be used with a Continuous Bag of Words (CBOW) architecture or a Skip-Gram architecture. The text information contained in the individual documents stored in the database may be learned through an artificial intelligence algorithm. Through this, a per-character response model may be obtained. This ensures that responses are both consistent and professional, and also ensures that actual information processing is handled by a specialized model for each function while the character maintains a consistent tone and emotion for a user. Examples of AI techniques that can be used for learning information from the documents include Naïve Bayesian, Term Frequency-Inverse Document Frequency (TFIDF), and k-nearest neighbors (KNN) algorithms (among others).

Meanwhile, according to one embodiment of the present invention, a user's character may be generated according to the user's request. For example, a character such as an influencer or a celebrity may be generated, and a response to a query entered by another user (e.g., a fan of the celebrity) may be made through the character.

Furthermore, each character may be generated for each user according to the user's request. The voices and face images of the owner of a character may be uploaded in advance from the user terminal 100 and trained on them, thereby allowing the character to be generated. This personalized character may provide a response to a query by using the voice and/or face image of the owner of the character.

A user may generate his or her character at any time. Furthermore, there may be included a user fine-tuning structure in which the user may cause the corresponding character to operate in conjunction with vectorized documents or data and may provide expertise or adjust emotion/rhythm.

In addition to simple function setting, visual components, including a UI color, a character image (an icon, an illustration, and/or the like), a font style, and a size, may freely be set for a user-generated character.

Furthermore, during an initial character setting process, a user may freely adjust speech style elements such as a manner of speaking, an emotional expression method, and a response tone, which are directly reflected in the basic response patterns of a character. This may have a positive influence on individual expression and emotional synchronization for each user, and may improve the degree of immersion in an AI interface.

For each character, whether it is open (private or public) may be set, and the use of a specific character, the range of access to functionality, API call authority, and/or the like may be hierarchically controlled depending on the user or administrator account.

A private character for the internal use of a company may be accessed only by internal users, and some functions may be set to require administrator approval.

The response unit 230 identifies a character corresponding to a specific field identified as a result of the analysis of a query received from the user terminal 100, and generates a response to the query through the character.

The front end of a character focuses on responding to a user via an LLM, and the back end thereof performs functions such as document summarization, emotion analysis, legal judgment, and code generation, and generates response content through a multi-model combination structure assigned to an LLM or AI engine.

In more detail, the front end may be in the form of an AI chatbot, to provide conversations with users. The front end may conduct natural conversations with users using NLP algorithms (e.g. analyzing users' intentions through tokenization, part-of-speech tagging, parsing, semantic analysis, intent recognition, etc.) and machine learning. The back end may be an AI model that outputs answers based on the identified user's intentions. The back end may operate on a model acquired as a result of learning through the documents in the database, e.g. using learning and classification algorithms (e.g. Naive Bayesian). In other words, the back end model may learn information from the documents in the database as described above. In response to a user query, the back end model may determine an answer to the user's query, and the front end model (e.g. chatbot) may provide the answer to the user. For example, the front end model may naturally utter the answer for the user.

Design may be made to automatically switch to a character using an appropriate language by analyzing a user's language, location, and connection device and to enable responses that reflect cultural context therein.

Furthermore, a character's manner of speaking, rhythm and response strategy may be dynamically adjusted based on a user's past purchase patterns, complaint reviews, usual preferences, and/or the like. Responses to VIP customers and the strengthening of emotional responses in sensitive situations are enabled.

A character may provide feedback to a user not only through a text response but also through voice. The character may be operated in conjunction with a TTS engine or voice model capable of adjusting the voice tone according to the emotional state and context.

Furthermore, a current emotional state may be estimated in real time or periodically by analyzing the manner of speaking, word choice, rhythm, response flow, and/or like that appear in a process in which the owner of a character uses AI. When the character responds, a corresponding emotion may be reflected in a manner of speaking, a response structure, a voice tone, and/or the like and transmitted to a third party (a querist or a fan).

The present system may be configured to allow various professionals, such as a restaurant manager, a fitness trainer, a legal service provider, and an insurance consultant, and small business owners to generate their own characters and automatically respond to customer queries.

In addition to consultation response, the character performs user reservation, service description, price guidance, location information provision, and/or the like, and reservation confirmation may automatically be transmitted to the owner of the character or operated in conjunction with an external system (e.g., an API). This structure may be utilized as an AI proxy response system for an actual professional or salesperson.

According to one embodiment of the present invention, when a user connects to the service server 200 through the user terminal 100, a basic (home) character is shown, and multilingual consultation, emotional rhythm-based response, and interactive memory systems may be applied through the shown character.

Thereafter, a character required for the user's query and personal information (e.g., an occupation, work, and/or the like) may be recommended. Basically, the LLM of the front end of the character responds, and, when necessary, a combination of the LLM and the LLM model of another character may be employed.

For example, the character "AI Solomon" may perform the summarization of judicial precedents and response to legal queries, and may be operated in conjunction with exclusive legal document vectors. A character in the development field may be equipped with stack overflow-based vector knowledge and a code executor dedicated to developer support, and may then provide responses.

The character "AI Young Boy" is a fortune-telling professional character, and may perform fortune-telling analysis based on the date of birth and push notification at a designated time every day. The character "Influencer" is a celebrity-based character, and may respond with the learned voice of the character when a fan selects a voice conversation and may respond with a video including the learned face and voice of the character when a video conversation is selected. The character may respond to an query of a fan, may perform event-based push notification, and may inform the fan of a recent emotional state, and the character's manner of speaking may also be changed according to the emotion. The character "Company Type, Private Type" operates a private character designed exclusively for an administrator account for document security and access control inside a specific company or when security is required. Access to this character is restricted to designated personnel only, and specific advanced functions (e.g. document editing, operation in conjunction with an external system, and the like.) in the response are executed only through a process for an administrator's prior approval. In addition, the character is not shared with external users or users in other departments within the same organization.

The backend LLM is optimized for knowledge-based responses. Consistent responses may be made by applying a manner of speaking, an emotion, and/or the like through the frontend LLM.

A unique web page may be provided for each character. The corresponding web page may be provided with an interface or menu that enables the checking of the query/response history of the character, the modification of the character, and/or the like. In other words, this service may be referred to as a "distributed AI character."

Meanwhile, according to one embodiment, some of the characters for general users have a structure that autonomously adjusts a response style, rhythm, or expression method based on a user's repeated feedback, response evaluation, selected response history, and/or the like.

For example, when a user continuously requests a specific code style, a corresponding character generates responses preferentially reflecting the corresponding style therein for similar queries thereafter. Such tuning is continuously improved based on user responses alone without prior training.

In addition, according to one embodiment, for a personalized character generated by a user, the character responds to a query from a first user in the form of a chatbot, and a second user who generated the corresponding character may modify a response already provided or a response scheduled to be provided. To this end, information about the response already provided or the response scheduled to be provided may be transmitted to the terminal of the second user. When the modification is made, a push alarm may be transmitted to the terminal of the first user in order to notify the first user that the modification has been made. The service may be provided in the form of a conversational messenger between users that includes the above function, and may be implemented as a messenger application service, a social network service (SNS) service, or the like.

Meanwhile, according to one embodiment, as a result of the analysis of a user's query, there may be a plurality of matching professional fields.

In this case, a character corresponding to a professional field having the highest score P calculated by the following equation may first be recommended to the user, and then the user may exchange queries and responses with the recommended character. $P = Q + R + I$

In the above equation, Q is a value corresponding to the degree of matching between the character being scored and the user's query. As a result of the analysis of the user's query, the probability that it corresponds to a professional field for each character may be derived. For example, the probability may be represented by the similarity between the vector obtained as a result of the analysis of the query and the vector of documents organized in a database for each professional field. R is the rate at which the character has been recommended to other users whose similarity in personal information (e.g., residence, gender, age group, occupation, position, and/or the like) is equal to or higher than a threshold value. When the character has never been recommended, the value of R is 0. Furthermore, the similarity in personal information may be obtained by generating vectors with the variables of the personal information set as respective dimensions and comparing the similarities between the vectors. I is a value proportional to the similarity between the intensity of positivity according to the user's emotional state analyzed based on the user's query (voice or text) and the intensity of positivity according to the emotion of the character being scored. Through voice or text analysis, emotions may be classified into types such as anger, happiness, sadness, and joy, and the individual results may be sorted from positive to negative. For example, definition may be made such that the intensity of negativity increases in the order of happiness, joy, sadness, and anger, and definition may be made such that the intensity of positivity increases in the reverse order. The intensity of positivity may be assigned as a numerical value to each emotion analysis result. For example, happiness is assigned the highest value, and anger is assigned the lowest value. Furthermore, the degree of emotion currently applied to each character may be preset, and may be analyzed according to preset styles (e.g., intonation, pitch, speech style, speech speed, and/or the like). Accordingly, the intensity of positivity may also be applied to each character.

By doing this, a character that has been used by other users having similar personal information and has a similar emotional state while matching a query may first be recommended to the user. Accordingly, the user may freely exchange queries and responses through his/her current situation, the content of his/her curiosity, and the optimized character.

In this process, the above score P for the character currently in conversation may be calculated in real time or at preset periods. When the above score P decreases by a threshold value or rate from the time when the conversation with the character is initiated, the above scores between the user and other characters may be recalculated, and the character may be replaced with a character having the highest score at the time when recalculation is performed. Alternatively, the initially recommended character and the character recommended again through the recalculation may simultaneously provide responses to the user's query, and the user may select one of the characters and continue to exchange queries and responses with the selected character.

The above description of the present invention is intended for illustrative purposes, and those having ordinary skill in the art to which the present invention pertains will understand that the embodiments described above may be easily modified into other specific forms without departing from the technical spirit or essential features of the present invention. Accordingly, it should be understood that the embodiments described above are exemplary but not limiting in all respects. For example, each component described as having a single form may be implemented in a distributed manner, and likewise, components described as being distributed may be implemented in a combined form.

The scope of the present invention is defined by the attached claims, and all the changes or modifications derived from the meanings and scope of the claims and their equivalents should be interpreted as being included in the scope of the present invention.

## Claims

1. A system for providing a character-based professional agent service, the system comprising:
a user input reception unit configured to receive a query and user information from a user terminal, and to identify a matching professional field by analyzing the query;
a per-character model acquisition unit configured to operate in conjunction with a database in which vectorized documents are stored, and to generate a character capable of responding for each professional field by learning information stored in the database; and
a response unit configured to provide a response to the query through the character corresponding to the professional field identified based on the query.

2. The system of claim 1, wherein the per-character model acquisition unit generates a personalized character having a user's image and voice according to a request from the user terminal.

3. The system of claim 1, wherein:
the response unit calculates a score for each character and first recommends a character having a highest calculated score; and
the score is proportional to a similarity between a vector obtained as a result of analysis of the query and a vector of documents organized in a database for each professional field of each character and a rate at which each character has been recommended to other users whose similarity in personal information is equal to or higher than a threshold value.
